# EUROPEAN PATENT SPECIFICATION

(11) **EP 2 691 341 B1**
(45) Date of publication and mention of the grant of the patent: **04.03.2015**
(21) Application number: 12737614.3
(22) Date of filing: 28.05.2012
(51) Int. Cl.: C02F 1/467, C02F 1/46, C25B 1/26, C25B 15/08

(54) **METHOD OF HYPOCHLORITE PRODUCTION AND RELATED SEA WATER ELECTROLYZER WITH ANTI SCALE IMPLEMENT**
VERFAHREN UND VORRICHTUNG ZUR HYPOCHLORITHERSTELLUNG AUS MEERESWASSER MIT VERHÜTUNG VON KESSELSTEINBILDUNG
PROCÉDÉ DE PRODUCTION D'HYPOCHLORITE ET ÉLECTROLYSEUR D'EAU DE MER ASSOCIÉ AVEC APPLICATION ANTITARTRE

(43) Date of publication of application: 05.02.2014
(73) Proprietor: S.E.S.P.I. S.r.l., 20134 Milano (MI) (IT)
(72) Inventor: RIGHETTI, Luigi, 20068 Peschiera Borromeo MI (IT)
(74) Representative: Pellegri, Alberto
(86) International application number: PCT/IT2012/000155
(87) International publication number: WO 2013/179314

(56) References cited:
- WO-A2-02/090264
- US-A- 4 248 690
- US-A1- 2010 051 477

## Description

### TECHNICAL FIELD

The present disclosure relates in general to electrolytic hypochlorite generation in diluted impure saline solutions like sea water and in particular to a method and implement for contrasting build up of scale over electrode and other surfaces inside the electrolyzer.

### STATE OF THE ART

The electrolysis of sea water is commonly used for the direct production of hypochlorite to prevent bio-fouling and scaling of cooling systems, water ballasts, and alike.

In the context of this disclosure, though generically referring to sea water, it must be intended that the description of the problems and of the solution found apply, *mutatis mutandis,* also to equivalent diluted saline solutions containing sodium chloride besides other salts and impurities of organic and /or inorganic type, like brackish water bodies of natural origin or of water bodies in densely populated urban areas, etc..

The process, which is much safer and more economical than the addition of gaseous chlorine into the sea water cooling circuit, suffers of problems connected to impurities and dissolved substances present in the sea water. It is known that sea water contains, in addition to sodium chloride, which is the starting material for the production of hypochlorite, many other ions that interfere with the process. The fundamental reactions occurring when a direct current flows through the sea water in the electrolyzer (often referred to also with the functional name of electro-chlorinator) are the following:
at the anode: generation of chlorine

   2Cl⁻ → Cl₂ + 2e⁻ 1)
at the cathode: generation of hydrogen and formation of hydroxide ions

   2H₂O + 2e⁻ → 2OH⁻ + H₂ 2)
in the gap between the electrodes: interaction between chlorine and hydroxide ions that generates hypochlorite

   Cl₂ + 2OH⁻ → H₂O + ClO⁻ + Cl⁻ 3)

The hydrogen bubbles that forms inside the electrolyzer and that are transported in the stream of water eventually surface in a stocking vessel of the hypochlorite containing solution to be diluted in an air stream that constantly vent it to atmosphere.

Hypochlorite has a specific oxidizing and sterilizing effect and regenerates the original chloride ion when contacting organic substances or by effect of light, heat or of readily oxidizable ions, thus leaving no noxious residues in the sea water after the sterilization process.

Unfortunately, both at the anode, at the cathode and in the electrolyte solution (sea water) there occur numerous undesired chemical reactions, an exhaustive review of which may be read from US-4.488.945, though it focus almost exclusively on electrochemical and chemical transformations originating from parasitic anodic reactions and on consequent deactivation mechanisms of the metallic anodes. The pertinent description is intended herein incorporated by express reference.

Many other ions are generally or occasionally present in coastal waters. Calcium, magnesium, iodine, bromine, sulfur and many heavy metals ions may be found. In particular, calcium and magnesium are present in relatively large amounts in sea water and cause a severe scaling of the surface of the negatively biased electrodes and other surfaces. These scales are generally porous and do not interfere with the normal functioning of the cell, but their rapid growth makes them more and more compact and cause an increase of the operating cell voltage and consequent waste of electric power.

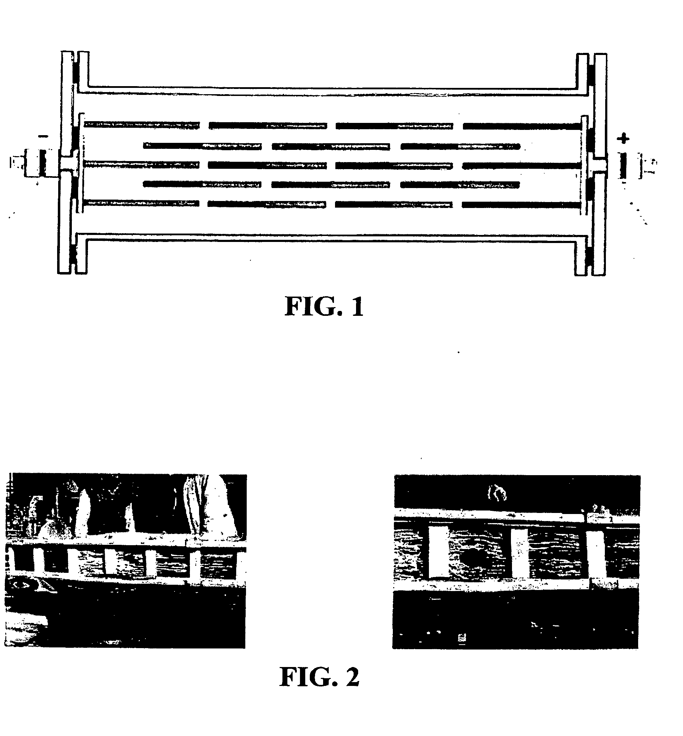

A commonly preferred architecture of electrolyzer for an electro-chlorination plant is depicted in Fig. 1. A tubular casing contains a pack of spacingly interleaved planar anodes and cathodes defining interelectrodic gap spaces there between, practically composing a multiplicity of electrolytic cells, electrically parallelized (4 cells in parallel) in a tranverse direction and serialized (5 cells in series) in the longitudinal direction of the tubular casing of the electrolyzer, connected to a DC source through a positive connector and a negative connector at the opposite ends of the tubular casing.

In particular, the growth of scaling in the interelectrodic gap increasingly hinders a correct distribution of the flow of sea water between the flat counter-opposed surfaces of the metal plate electrodes as far as clogging definitely the electrode pack of the electrolyzer.

A observable in the photograph of Fig. 2, an excessive scaling, if not punctually controlled tends to progress in an exponential way and may bend the metal plate electrodes and eventually cause electrical sparks and even destructive short circuits, phenomena that may be fostered also by a concurrent process of galvanic deposition of metals.

Each acid wash phase usually takes from 3 to 5 hours with associated loss of production besides the cost of the acid (commonly HCl), waste liquor treatment/disposal and hazard management costs.

Even a gross pre-purification process of the sea water to be passed through the electrolyzer would be utterly uneconomical, given that the flown volume of sea water is generally between 400-1000 liters per kg of chlorine generated at the anode.

Therefore, frequent acid washings of the electrode pack must be carried out in order to remove accumulated scale and metal deposits. Depending on the salinity of sea water, flow rate, current density and state of the electrodes, the interval between these scheduled maintenance operations may be as short as 10-25 days.

US-Patent No. 4,248,690-A discloses an electrolyzer of natural and synthetic brines for producing hypochlorite solutions, having insulating disc partitions for separating the cells of a succession of cells electrically and hydraulic in series. The partitions have an array of flow through holes of the brine and a second array of holes at an higher elevation than the free surface of the flowing brine for bringing in communication gas collection spaces at the top of each cell with a common gas outlet nozzle. When feeding a concentrated synthetic brine, dilution water is introduced at the bottom of each cell through a distribution manifold.

Published application US-2010/005477-A1 discloses a multistage treatment plant of waste waters for abating total nitrogen contributing compounds such as ammonia nitrogen, nitrous acid nitrogen, nitrate nitrogen etc., including a vessel of electrolytic treatment of the liquid waste of undefined but generally complex composition including surfactants and which may or may not include also chlorides. A multi nozzle shower suspended in the electrolysis vessel above the overflow chamber and the submerged edges of the electrode plates that define a zig-zag flow path of the liquid waste and during the electrolysis process sprays the liquid surface for breaking up and contrasting formation of persistent foam and bubbles over the liquid surface because of the presence of surfactants in the waste water. The shower is also useful for periodically washing the electrodes after stopping processing and draining the vessel.

### OBJECTIVE AND SUMMARY OF THE INVENTION

Objective of the applicant was to find a viable way to alleviate the frequency and/or duration of the periodic down times of an electro-chlorination plant, required for carrying out an effective acid wash of the interior of the electrolyzer after a period of operation and to reduce acid consumption and the power costs associated to such unavoidable routine maintenance of the plant.

Field trials carried out by the applicant by varying the flow rate of sea water through the tubular electrolyzer casing containing a pack of spacingly interleaved planar anodes and cathodes defining interelectrodic gap spaces there between, generally composing a multiplicity of electrolytic cells, electrically parallelized in a tranverse direction and serialized in the longitudinal direction of the tubular casing of the electrolyzer, were not encouraging.

Even at flow rates largely exceeding the critical Reynold figure for ensuring a turbulent flow through the electrolyzer, no significant hindrance of the scaling process of the electrodes was observed whilst the increased pumping significantly penalized efficiency of the chlorination process. Even the deployment of flow diverting baffles proved to have scarce or null effect.

This seemed to reinforce a largely predominant belief that turbulence would probably worsen the problem of scaling because of an enhanced transport of ions to the electrodes or, at best, be ineffective in contrasting scaling. However, the applicant did not give up on the idea that a turbulent flow of sea water could be of aid in countering the rapid build-up of scale in the interectrodic gap spaces.

Despite these early failures, the solution finally found by the applicant has proven itself surprisingly effective.

Basically the idea has been to introduce into the stream of sea water pumped through the tubular casing of the electrolyzer a plurality of secondary or ancillary streams of highly pressurized water in form of high speed jets ejected from an array of nozzles, disposed at regular intervals along the whole length of at least one side of the elongated pack assembly. The location of the many nozzles, their distance from the electrode pack and the spacing intervals among each other are such to ensure that high speed jets of liquid encroach (are directed toward) into the interelectrodic gap spaces, in a direction orthogonal or inclined in respect of the longitudinal flow direction of sea water there through; the sought effect being to disrupt a probably laminar flow of sea water within the interelectrodic gap spaces and induce an energetic turbulence of the liquid therein.

A surprisingly remarkable decrement of the rate of accumulation of scale on electrode and other inner surfaces of the electrolyzer was immediately observed, which appeared to confirm the applicant's suspicion that a honeycomb effect of the closely packed parallel plate electrodes could have been responsible of vanifying his previous experiments aiming to verify a possible benefit from turbulence.

The overpressure of the liquid to be injected should be sufficient to produce energetic (high speed) jets adapted to encroach deep inside the interelectrodic gap spaces. The kinetic energy of the jets is gradually absorbed by the liquid flowing through the gap spaces from the inlet end to the outlet end of the tubular casing of the electrolyzer containing the elongated electrode pack. The input of kinetic energy in a transverse or inclined direction of encroachment of the jets in the liquid flowing in the gap spaces disrupt the laminar flow causing an energetic turbulence in the interelectrodic body of liquid which appears to effectively hinder a stable accumulation of scale, a good portion of which is swept by the liquid stream out of the electrolyzer and/or falls into drain nozzles normally present in the lower part of electrolyzer, from where the scale may be discharged.

A periodic ejection of jets of pressurized liquid may be carried out during normal operation of the electrolyzer or the electrolysis process may be interrupted during the ejection phase. Preferably, interruption of the DC electrical powering of the electrodes and of the forced flow of the process liquid through the electrolyzer is commanded when the discharge valve of drain nozzles present along the bottom of the electrolyzer need to be opened for discharging accumulated scale, displaced by the jets from the electrode surfaces and sunk to the bottom.

Numerous test runs have clearly demonstrated that the high pressure injection of orthogonal/inclined jets does not need to be continuous and that an intermittent injection is preferable. Generally, for an electrolytic process conducted at a current density of 1,000 to 1,800 A/m², the intermittent high pressure scale sweeping phase may have a duration of about 5 min. and be carried out every 15-30 minutes. However, duration and frequency of the scale sweeping phase may be adjusted by a control PLC depending on operating conditions and quality of the processed saline water. The PLC is also programmable for implementing scale sweeping phases without interruption of the electrochemical process and scale sweeping phases with simultaneous interruption of the electrochemical process and opening of the bottom discharge drains, according to needs or pre-established time schedules.

Generally the pressure of the injected liquid may be comprised between 5 and 10 N/m2.

The ratio between the cumulative flow rate of liquid ejection through said plurality of nozzles and the flow rate of said forced flow of process liquid through the electrolyzer may be comprised between 0.2 and 0.6.

The cumulative flow rate of the plurality of secondary or ancillary streams of highly pressurized water in form of high speed jets practically amounts to a fraction of the flow rate of the main flow of sea water pumped through the electrolyzer. This limits the power requirement for pressurizing the liquid to be injected for a surprisingly low cost/benefit ratio when considering the overall economical figures of the electro-chlorination process.

An evaluation test, carried out on two of a battery of four identical electrolyzers CHLOROPURE™ - HPSC (a trademark of S:E:S:P:I: srl- Milan-Italy) of a commercial electro-chlorination plant gave the following results:
o the long established frequency of routinely performed acid wash steps of the interior of the electrolyzers not equipped with the novel auxiliary injection system of the present disclosure, every 18 days of continuous operation was maintained unchanged;
o the frequency of the routinely performed acid wash steps of the interior of the electrolyzers equipped with the novel auxiliary injection system of the present disclosure, after few adjustments following initial check runs, could be set to 165 days of continuous operation, achieving almost a tenfold reduction of the duty cycle of periodic acid wash.

The invention is defined in the annexed claims, the content of which is intended constituting integral part of the present description and herein incorporated by express reference.

A description of embodiments of this invention with reference to the annexed drawings will follow, with the sole aim of making clear to the skilled artisan manners in which the invention may be practiced, without any intended limitation of its practice to the exemplary embodiments shown and described in detail.

### BRIEF DESCRIPTION OF DRAWINGS

**Fig.1** is a basic cross sectional view showing the structure of an electrolyzer commonly used for generating sodium hypochlorite in a stream of sea water or equivalent saline solution.
**Fig. 2** is a photograph and an enlargement of it of the electrode pack of a commercial sea water electrolyzer, practically destroyed by an unchecked growth of scale.
**Figs. 3A****,** **3B****,** **3C** and **3D** provide a basic illustration of an electrolyzer for sea water electrolysis embodying the novel anti scaling implement of this invention.
**Figs. 4A** and **4B** are a view from atop and an enlarged partial view, respectively, of the pre-assembled electrode pack of the electrolyzer.
**Fig. 5** is an exploded detail view of a pressurized water distributor with uniformly spaced nozzle assembly according to an exemplary embodiment.
**Fig. 6** is a general functional diagram of an electro-chlorination plant using the novel electrolyzer of this invention.

### DESCRIPTION OF EXEMPLARY EMBODIMENTS

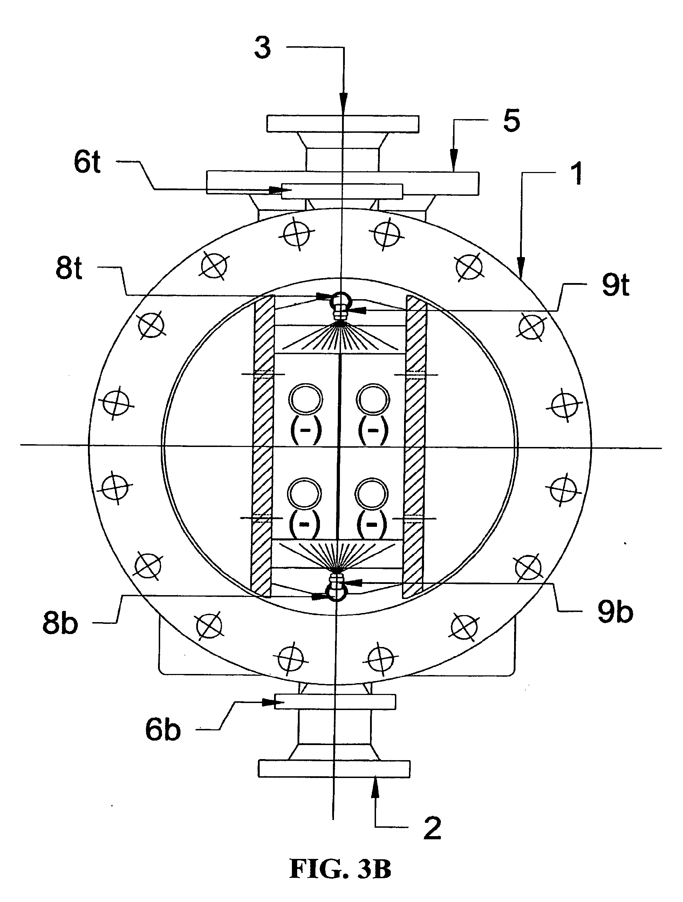

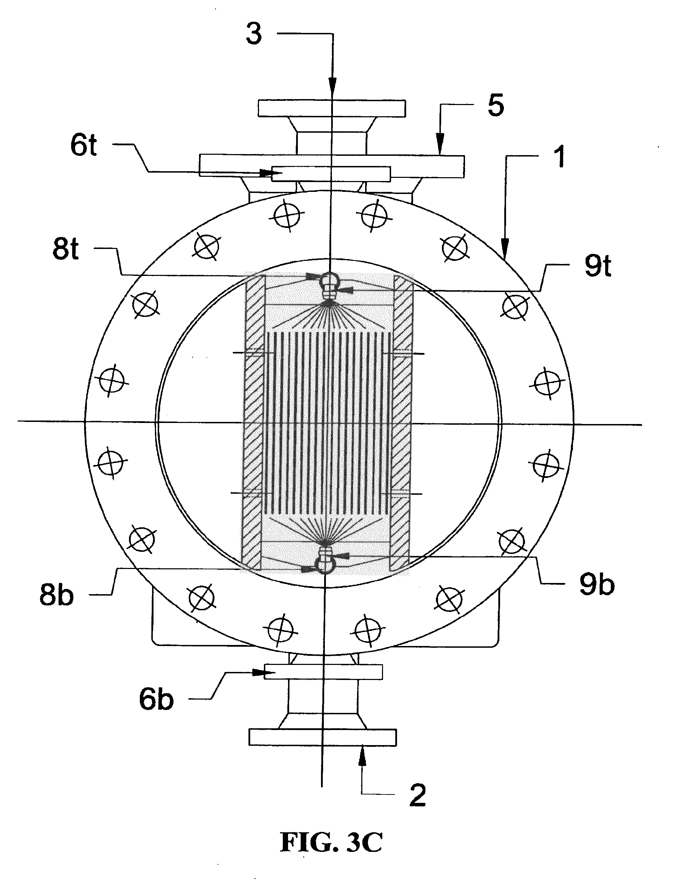

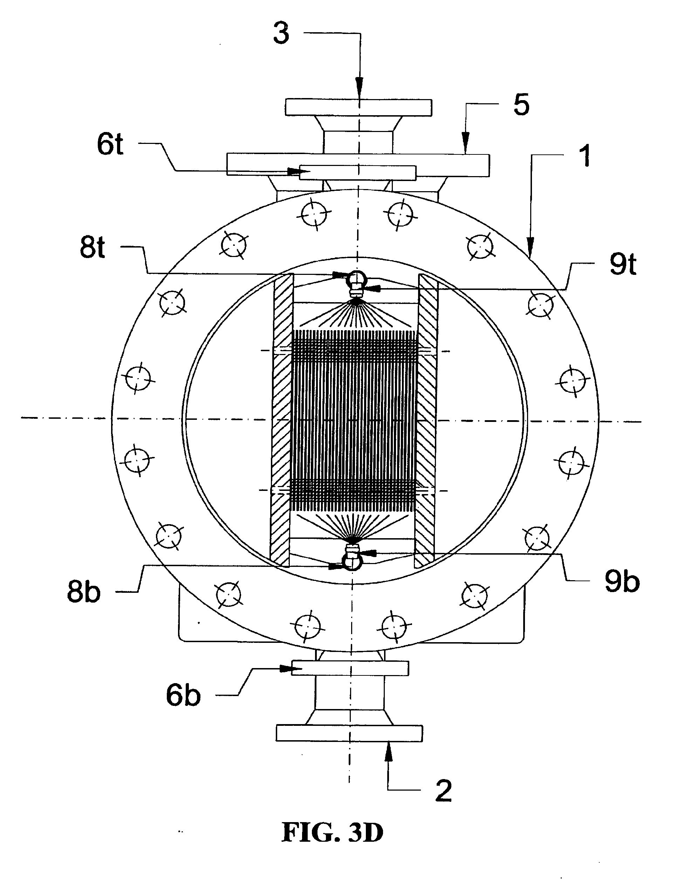

**Fig, 3A****,** **Fig. 3B****,** **Fig. 3C** **and** **Fig. 3D** are a longitudinal cross sectional view and end views without and with sectional views of the electrode pack ,off and in coincidence with one array of spacers, respectively, of an exemplary commercial sea water electrolyzer for electro-chlorination plants, equipped with the anti-scaling implements of this invention.

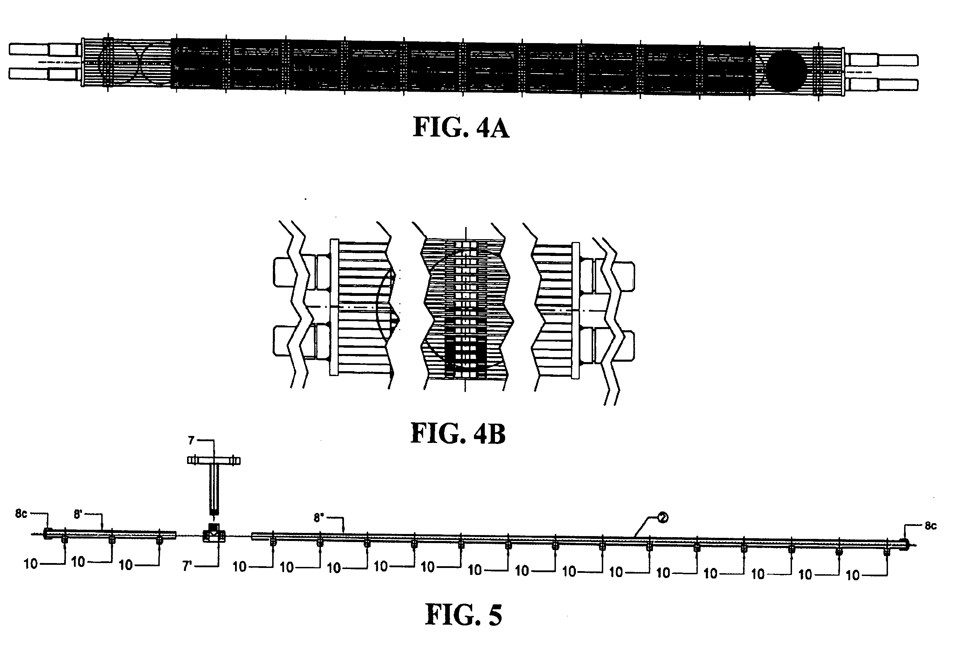

The electrolyzer has a tubular casing 1, commonly a horizontal cylindrical shell of PVC with an outer cladding of GRP, closed by end flanges (not shown), adapted to contain a pre-assembled multi electrode pack (C1,...., A1), the functional arrangement of which already depicted in **Fig. 1****,** may be recognized in the view of the pack from atop of **Fig. 4A** and in the partial enlarged drawing of **Fig. 4B****,** where the insulating spacers between the plate electrodes are more visible. The tubular casing 1 has a sea water inlet nozzle 2 and an outlet nozzle 3 through which hypochlorite containing sea water and hydrogen bubbles dispersed in the liquid stream exit the electrolyzer. The bottom nozzles 4 serve for flush discharging the acid solution with which the interior of the electrolyzer if filled when carrying out the periodic acid washings. An optional nozzle 5 at the top may be provided, closed with a transparent pane, in order to provide a visual inspection window of the state of the scale accumulation.

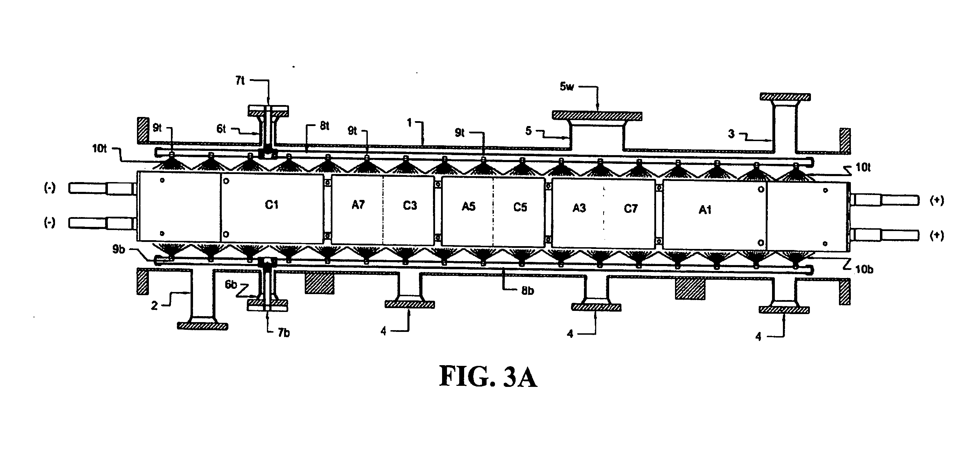

Referring to the longitudinal side view visible in **Fig. 3A** and to the orthogonal view of **Fig. 4A****,** in the illustrated embodiment, the electrode pack assembly defines a multicell electrical series formed by planar titanium plate electrodes, 1 mm thick, each having, over the anodically polarized portion (A1, A2, A3,..., A7) of the plate, a non passivating, conductive metal oxide coating with a low chlorine ion oxidation overvoltage and without any coating or with a low hydrogen ion discharge overvoltage metallic coating over the cathodically polarized portion (C1, C2, C3, ..., C7). A terminal cathodic head (C1) and a terminal anodic head (A1), each generally in form of a about 17 to 65 teeth comb-like assembly of parallel cathode plates and anode plates, respectively, (refer also the basic functional scheme of **Fig. 1****)** connect to a DC power source via rods (electrical connection leads) passing through closing end flanges of the tubular casing 1.

The novel implements of this invention, according to the exemplary embodiment illustrated in **Fig. 5****,** consists of two additional nozzles 6t and 6b, respectively at the top and at the bottom of the casing 1, accommodating a flanged inlet pipe 7t and 7b, respectively, a threaded end of which tightens in a respective "T" coupling between the two portions 10t (and the two portions 10b) of a top and a bottom distributor pipe of high pressure water, closed at both ends.

Of course, alternative configurations of longitudinal distributors extending for the whole length of the electrode plate pack, above and underneath the top and the bottom edges of the vertically held parallel metal plates of the electrode pack are possible, for example, the distributor pipe may be in a single piece, one end of which passing through one of the end closing flanges of the tubular casing 1 for allowing a direct external hydraulic connection.

Though a single centrally positioned distributor may be sufficient, in case of larger electrode packs, two or more parallel distributors may be similarly deployed, in the top part and in the bottom part of the interior space of the tubular casing.

In any case, each distributor pipe has a plurality of equally spaced and similarly oriented nozzles 9t and 9b, respectively, adapted to release highly energetic jets (high exit velocity of the pressurized water) directed toward the spaced edges of the parallel electrode plates and the related interelectrodic gap spaces along which flows the stream of sea water pumped through the electrolyzer.

In the illustrated embodiment, the electrode pack assembly had the following dimensions: length 274 cm, width 24,8 cm, height 16,6 cm; the distributors were of ¾" PVC pipe and had 17 threaded PVC nozzles coupled to the pipe distributor at 150 mm intervals. The nozzles were set at a distance of 60 mm from the plane of the spaced edges of the parallel plate electrodes.

The preferred main construction material for piping, flanges internal and external supports, hydraulic seal fixtures and other fixtures is generally PVC, though other plastics may be alternatively used.

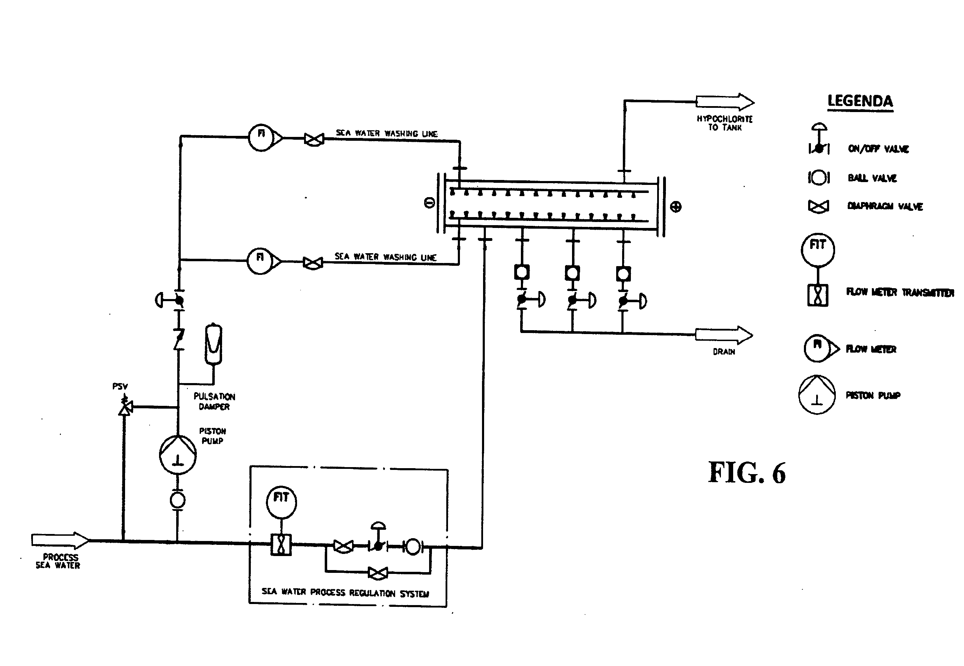

**Fig. 6** is a simplified general functional diagram of an electro-chlorination plant embodying the novel implements of this invention. The scheme and the legend of the symbolic representation of the functional element make the illustration perfectly legible by the skilled person and no specific description is deemed necessary for the fullest comprehension of the claimed invention.

## Claims

1. A process of electrolysis of sea water or equivalent saline water to produce hypochlorite therein in at least an electrolyzer having a plurality of spacingly interleaved vertically held planar anodes (A1, A3, .. A7) and cathodes (C1, C3, ... C7), defining interelectrodic gap spaces there between and constituting a multi electrode pack assembly (FIG. 4A, FIG. 4B) contained inside a tubular casing (1) of the electrolyzer, along which said sea water or equivalent saline water is forced to flow at a given flow rate, comprising the step of intermittently ejecting, through a plurality of nozzles (9t, 9b) disposed at regular intervals along the whole length of at least the top side of said pack assembly, jets of purposely pressurized sea water or equivalent saline water, directed towards said interelectrodic gap spaces, orthogonally and/or at an inclination relative to the streaming direction of sea water or equivalent saline water forced to flow inside said tubular casing (1) through said interelectrodic gap spaces, to disrupt laminar flow therein; duration and frequency of ejection being programmably controlled depending on operating conditions and quality of the processed saline water.

2. The process of claim 1, wherein the liquid being ejected is at a pressure comprised between 5 and 10 N/m².

3. The process of claim 1, wherein the ratio between the cumulative flow rate of ejection through said plurality of nozzles (9t, 9b) and the flow rate of said forced flow is comprised between 0.2 and 0.6.

4. The process of claim 1, wherein said jets directed into said interelectrodic gap spaces are simultaneously ejected from atop and from underneath said pack assembly (FIG. 4A, FIG. 4B) at spaced locations along said tubular casing (1).

5. An electrolyzer system for electrolyzing sea water or equivalent saline water to produce hypochlorite, the electrolyzer having a plurality of vertically held, spacingly interleaved planar anodes (A1, A3, .. A7) and cathodes (C1, C3, ... C7) defining interelectrodic gap spaces there between and constituting a multi electrode pack assembly (FIG. 4A, FIG. 4B) contained inside a tubular casing (1) of the electrolyzer along which said sea water or equivalent saline water is forced to flow at a given flow rate, further comprising:
means for diverting and pressurizing part of incoming sea water or equivalent saline water to be electrolyzed;
distribution pipes (8t, 8b) of said pressurized part of incoming sea water or equivalent saline water to be electrolyzed, extending inside said tubular casing (1), respectively above and underneath said multi electrode pack assembly (FIG. 4A, FIG. 4B);
pluralities of spaced nozzles (9t, 9b) coupled to said distribution pipes (8t, 8b) along the full extension of said electrode pack assembly inside said tubular casing (1), aimed toward said interelectrodic gap spaces, orthogonally and/or at an inclination relative to the streaming direction of sea water or equivalent saline water forced to flow inside the casing;
controller means adapted to intermittently eject energetic jets of said pressurized part of incoming sea water or equivalent saline water out of said pluralities of nozzles, of programmable duration and frequency.

## Patentansprüche

1. Ein Verfahren zur Elektrolyse von Meerwasser oder gleichwertigem, salzhaltigen Wasser, um dabei Hypochlorit zu erzeugen in wenigstens einem Elektrolyseur mit einer Mehrzahl von verschränkten, mit gegenseitigem Abstand vertikal gehaltenen, ebenen Anoden (A1, A3... A7) und Kathoden (C1, C3, .. C7), welche dazwischen liegende Zwischenelektroden-Spalträume begrenzen und eine Mehrfachelektroden-Paketanordnung (Fig. 4A, Fig. 4B) bilden, die innerhalb eines rohrförmigen Gehäuses (1) des Elektrolyseurs aufgenommen ist, entlang welcher das besagte Meerwasser oder das gleichwertige, salzhaltige Wasser gezwungenermaßen mit einer bestimmten Durchflussrate fließt, umfassend den Schritt des intermittierenden Ausstoßens durch eine Mehrzahl von in regulären Intervallen entlang der gesamten Länge wenigstens der Oberseite der besagten Paketanordnung angeordneten Düsen (9t, 9b) von Strahlen von bewusst unter Druck gesetztem Meerwasser oder gleichwertigem, salzhaltigen Wasser in Richtung zu den Zwischenelektroden-Spalträumen, rechtwinklig und/oder unter einer Neigung gegenüber der Strömungsrichtung des Meerwassers oder gleichwertigen, salzhaltigen Wassers, das gezwungenermaßen innerhalb des Gehäuses durch die besagten Zwischenelektroden-Spalträume fließt, um die laminare Strömung darin zu stören; wobei die Dauer und Frequenz des Ausstoßes programmtechnisch gesteuert wird in Abhängigkeit von Betriebsbedingungen und der Qualität des verarbeiteten, salzhaltigen Wassers.

2. Das Verfahren nach Anspruch 1, wobei die auszustoßende Flüssigkeit unter einem Druck zwischen 5 und 10 N/m² steht.

3. Das Verfahren nach Anspruch 1, wobei das Verhältnis zwischen der gesamten Durchflussrate durch die besagte Mehrzahl von Düsen (9t, 9b) und der Durchflussrate des besagten, erzwungenen Flusses zwischen 0,2 und 0,6 liegt.

4. Das Verfahren nach Anspruch 1, wobei die besagten, auf die Zwischenelektroden-Spalträume gerichteten Strahlen simultan von oberhalb und unterhalb der besagten Paketanordnung (Fig. 4A, Fig. 4B) an voneinander beabstandeten Orten entlang des besagten röhrenförmigen Gehäuses (1) ausgestoßen werden.

5. Ein Elektrolyse-System für die Elektrolyse von Seewasser oder gleichwertigem, salzhaltigen Wasser zur Produktion von Hypochlorit, wobei der Elektrolyseur mit eine Mehrzahl von vertikal gehaltenen, mit gegenseitigem Abstand verschränkten, ebenen Anoden (A1, A3, .. A7) und Kathoden (C1, C3, .. C7) aufweist, welche dazwischen liegende Zwischenelektroden-Spalträume begrenzen und eine Mehrfachelektroden-Paketanordnung (Fig. 4A, Fig. 4B) bilden, die innerhalb eines rohrförmigen Gehäuses (1) des Elektrolyseurs aufgenommen ist, entlang welcher das besagte Meerwasser oder das gleichwertige, salzhaltige Wasser gezwungenermaßen mit einer bestimmten Durchflussrate fließt, ferner umfassend:
- ein Mittel zum Ableiten von eingeleitetem, zu elektrolysierenden Meerwasser oder gleichwertigem, salzhaltigen Wasser und um dieses unter Druck zu setzen;
- Verteilungsrohre (8t, 8b) für den besagten, unter Druck gesetzten und zu elektrolysierenden Teil des eingeleiteten Wassers oder gleichwertigem salzhaltigen Wassers, welche sich innerhalb des besagten, röhrenförmigen Gehäuses (1) erstrecken, beziehungsweise oberhalb und unterhalb der besagten Mehrfachelektroden-Paketanordnung (Fig. 4A, Fig. 4B);
- Mehrzahlen von beabstandeten Düsen (9t, 9b), welche an die besagten Verteilungsrohre (8t, 8b) entlang der vollen Erstreckung der besagten Elektroden-Paketanordnung innerhalb des röhrenförmigen Gehäuses (1) gekoppelt sind und auf die besagten Zwischenelektroden-Spalträume gerichtet sind, rechtwinklig und/oder unter einer Neigung gegenüber der Strömungsrichtung des Meerwassers oder gleichwertigen, salzhaltigen Wassers, das gezwungenermaßen innerhalb des Gehäuses fließt;
- ein Steuerelement, welches geeignet ist, intermittierend kräftige Strahlen des besagten, unter Druck gesetzten Teils des eingeleiteten Meerwassers oder gleichwertigen, salzhaltigen Wassers aus den besagten Mehrzahlen von Düsen auszustoßen, von programmierbarer Dauer und Frequenz.

## Revendications

1. Procédé d'électrolyse d'eau de mer ou d'eau saline similaire pour y produire de l'hypochlorite, dans au moins un électrolyseur ayant une pluralité d'anodes planes (A1, A3, ... A7) maintenues verticalement intercalées avec des espacements et de cathodes (C1, C3, ... C7), définissant des espaces d'écartement entre les électrodes et constituant un ensemble de bloc de plusieurs électrodes (figure 4A, figure 4B) contenu à l'intérieur d'un boîtier tubulaire (1) de l'électrolyseur, le long duquel ladite eau de mer ou eau saline similaire est obligée de s'écouler à un débit donné, comprenant l'étape consistant à éjecter de manière intermittente, par le biais d'une pluralité de buses (9t, 9b) disposées à intervalles réguliers le long de toute la longueur au moins du côté supérieur dudit ensemble de groupes, des jets d'eau de mer ou d'eau saline similaire mise sous pression délibérément, dirigés vers lesdits espaces d'écartement entre les électrodes, de manière orthogonale et/ou selon une inclinaison par rapport à la direction de courant de l'eau de mer ou eau saline similaire obligée de s'écouler à l'intérieur dudit boîtier tubulaire (1) à travers lesdits espaces d'écartement entre les électrodes, pour arrêter l'écoulement laminaire ; la durée et la fréquence d'éjection étant commandée par programme en fonction des conditions de fonctionnement et de la qualité de l'eau saline traitée.

2. Procédé selon la revendication 1, dans lequel le liquide est injecté à une pression comprise entre 5 et 10 N/m².

3. Procédé selon la revendication 1, dans lequel le rapport entre le débit cumulé d'éjection par ladite pluralité de buses (9t, 9b) et le débit dudit écoulement forcé est compris entre 0,2 et 0,6.

4. Procédé selon la revendication 1, dans lequel lesdits jets dirigés dans lesdits espaces d'écartement entre les électrodes sont simultanément éjectés depuis le dessus et depuis le dessous dudit ensemble de groupe (figure 4A, figure 4B) à des emplacements espacés le long dudit boîtier tubulaire (1).

5. Système d'électrolyseur pour électrolyser l'eau de mer ou l'eau saline similaire pour produire de l'hypochlorite, l'électrolyseur ayant une pluralité d'anodes planes (A1, A3, ... A7) maintenues verticalement intercalées avec des espacements et de cathodes (C1, C3, ... C7) définissant des espaces d'écartement entre les électrodes et constituant un ensemble de bloc de plusieurs électrodes (figure 4A, figure 4B) contenus à l'intérieur d'un boîtier tubulaire (1) de l'électrolyseur le long duquel ladite eau de mer ou eau saline similaire est obligée de s'écouler à un débit donné, comprenant en outre :
des moyens pour dévier et mettre sous pression une partie d'eau de mer ou eau saline similaire entrante à électrolyser;
des tuyaux de distribution (8t, 8b) de ladite partie sous pression d'eau de mer ou eau saline similaire entrante à électrolyser, s'étendant à l'intérieur dudit boîtier tubulaire (1), respectivement au-dessus et au-dessous dudit ensemble de bloc de plusieurs électrodes (figure 4A, figure 4B) ;
des pluralités de buses espacées (9t, 9b) couplées auxdits tuyaux de distribution (8t, 8b) le long de toute l'extension dudit ensemble de bloc de plusieurs électrodes à l'intérieur dudit boîtier tubulaire (1), orientées vers lesdits espaces d'écartement entre les électrodes, de manière orthogonale et/ou à une inclinaison relative par rapport à la direction de courant de l'eau de mer ou eau saline similaire obligée de s'écouler à l'intérieur du boîtier ;
des moyens de commande adaptés pour éjecter de manière intermittente des jets rapides de ladite partie sous pression d'eau de mer ou eau saline similaire entrante, hors desdites pluralités de buses, de durée et de fréquence programmables.
